(19) Europäisches Patentamt

European Patent Office

Office européen des brevets

(11) **EP 1 442 951 B1**

(12) **EUROPÄISCHE PATENTSCHRIFT**

(45) Veröffentlichungstag und Bekanntmachung des Hinweises auf die Patenterteilung:
**18.10.2006 Patentblatt 2006/42**

(51) Int Cl.:
***B60T 7/12*** *(2006.01)*

(21) Anmeldenummer: 03100178.7

(22) Anmeldetag: **29.01.2003**

(54) **Verfahren und Vorrichtung zur Steuerung einer Bremsanlage**

Method and device for controlling a braking system

Méthode et dispositif de contrôle d'une système de freinage

(84) Benannte Vertragsstaaten:
**DE FR GB**

(43) Veröffentlichungstag der Anmeldung:
**04.08.2004 Patentblatt 2004/32**

(60) Teilanmeldung:
**06110317.2 / 1 690 764**
**06110319.8 / 1 690 765**

(73) Patentinhaber: **Ford Global Technologies, LLC.**
**Dearborn MI 48126 (US)**

(72) Erfinder:
• **Urhahne, Joseph**
**50259 Pulheim (DE)**
• **Risse, Hermann-Josef**
**50767, Koeln (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(56) Entgegenhaltungen:
**WO-A-02/090159**    **DE-A- 19 525 552**
**DE-A- 19 621 628**    **DE-A- 19 931 345**
**DE-A- 19 950 034**

EP 1 442 951 B1

**Beschreibung**

Die vorliegende Erfindung betrifft ein Verfahren zur Steuerung der Bremsanlage eines Fahrzeugs. Dabei wird eine vorhandene Bremsanlage, die geeignet ist, ein Verfahren zur Stabilisierung eines Fahrzeugs bei kritischen dynamischen Fahrzuständen durchzuführen, soweit modifiziert, daß die Bremsanlage in der Lage ist eine Anfahrhilfe für das Fahrzeug an Steigungen bereitzustellen. Die Erfindung betrifft weiterhin eine Bremsanlage, die dazu geeignet ist, das vorher beschriebene Verfahren durchzuführen.

Anfahrhilfen an Steigungen (auch "Hillholder" genannt) sind z. B. aus der DE 199 31 345 bekannt. Dabei werden die vorhandenen Möglichkeiten eines elektromechanischen Bremssystems um Sensoren bzw. Fahrerwunscherkennungssysteme erweitert, um so die gewünschte Komfortsteigerung zu erreichen.

In der DE 196 21 628 wird ein automatische Feststellbremsfunktion (Hillholder) vorgeschlagen, die aktiviert wird, sobald das Fahrzeug bei betätigter Betriebsbremse zum Stillstand kommt. Der dann herrschende Bremsdruck bzw. die sich daraus ergebende Bremskraft wird an wenigstens einer Radbremse unabhängig vom Ausmaß der Betätigung des Bremspedals gehalten bzw. aufgebaut und bei Lösen des Bremspedals wieder abgebaut. Eine derartige Hillholderfunktion vermeidet umfangreiche Sicherheitsmaßnahmen, so übernimmt z. B. zur Anfahrunterstützung an Steigungen bei gleichzeitiger Betätigung von Brems- und Kupplungspedal bei Lösen des Bremspedals das Kupplungspedal die Aktivierung bzw. Deaktivierung der Hillholderfunktion.

Aus der DE 199 50 034 schließlich ist ein Verfahren bekannt, bei dem eine Hillholderfunktion mit einfachen Mitteln verwirklicht wird. Dabei wird nach erkanntem Stillstand des Fahrzeugs die Bremskraft aufrecht erhalten und nach Lösen des Bremspedals die Bremskraft z. B. nach einer gewissen Zeit wieder abgebaut. Dabei kann die Aktivierung des Hillholders u.a. abhängig von dem Signal eines Neigungssensors oder abhängig von einer Neigungserkennung anhand anderer, nicht näher spezifizierter Größen erfolgen.

Die DE 195 25 552 offenbart ein weiteres Verfahren zur Implementierung einer Hillholder-Funktion.

Die WO 02/090159 A1 offenbart ein gattungsgemäßes Verfahren zur Implementierung einer Hillholder-Funktion, bei dem die Hillholder-Funktion bei Erkennung einer Fahrzeugstillstands und bei Erkennung einer Hangneigung anhand des Signals eines Neigungssensors aktiviert wird.

All diesen Verfahren ist zu eigen, daß sie in der Regel zusätzliche Sensoren und/oder Aktuatoren zur Erkennung des Fahrerwunsches, das eine Hillholderfunktion gewünscht ist, und/oder zur Detektierung des Anfahrwunsches, bzw. zur Durchführung des Verfahrens benötigen.

Aufgabe dieser Erfindung ist es, ein Verfahren zur Durchführung einer zuverlässigen Hillholderfunktion bereitzustellen, das vollständig auf zusätzliche Sensoren oder Aktuatoren verzichtet. Voraussetzung ist allerdings, daß das Fahrzeug mit einer Bremsvorrichtung ausgestattet ist, die in der Lage ist, die Stabilisierung eines Fahrzeugs bei kritischen dynamischen Fahrzuständen durchzuführen. Eine solche Bremsvorrichtung wird auch Elektronisches Stabilitätsprogramm (ESP) oder Dynamische Stabilitätskontrolle (DSC) genannt.

Erfindungsgemäß wird dabei das Verfahren zur Durchführung einer Hillholderfunktion in zwei Verfahrensschritte unterteilt. Im ersten Schritt wird dabei eine Erkennung einer Neigung der Fahrbahn gegenüber der Längsachse des Fahrzeugs durchgeführt. In vorteilhafter Weise geschieht dies, in dem die üblicherweise vorhandenen Signale für Fahrzeuggeschwindigkeit und Bremsdruck betrachtet werden. Bei einer Bremsung an einer Steigung wird bekanntermaßen ein Teil der kinetischen Energie des sich bewegenden Fahrzeugs in potentielle Energie umgewandelt, es ist also weniger kinetische Energie durch die Bremse in Wärme umzuwandeln. Das bedeutet, daß die Bremsleistung geringer ausfällt und damit auch ein geringerer Bremsdruck und damit Bremskraft nötig ist, um im Vergleich zu einer Bremsung auf einer Fahrbahn ohne Steigung das Fahrzeug zum Stillstand zu bringen.

Dem zweiten Schritt liegt der Gedanke zu Grunde, daß ein an einer Steigung zum Stillstand gebrachtes Fahrzeug mit der Betriebsbremse gegen Zurückrollen gesichert wird. Die Hillholderfunktion wird daher erst eingeschaltet, wenn die Betriebsbremse eine bestimmte Zeit bei stehendem Fahrzeug betätigt wird. Zum Anfahren kann dann in bekannter Weise z. B. der Bremsdruck erst nach einer vorgegebenen Zeit nach Lösen des Bremspedals kontrolliert abgebaut werden.

Bei einer vorteilhaften Ausgestaltung der Erfindung wird an Stelle der oben beschriebenen Zeitverzögerung zum Abbau des Bremsdrucks nach Lösen des Bremspedals eine Motorseitig gesteuerte Funktion verwendet. Berücksichtigt werden dabei die Signale von Bremsdruck, Motordrehzahl, die Ableitung der Motordrehzahl sowie die Gaspedalstellung bzw. die direkt von der Gaspedalstellung abhängige Stellung der Drosselklappe. Diese Größen sind vorhanden, bzw. können errechnet werden, so daß auch hier keine zusätzliche Sensorik insbesondere kein Neigungssensor nötig ist.

Weiterhin berücksichtigt die Erfindung, daß die Funktion nicht dazu geeignet ist, die Handbremse zu ersetzen. Deswegen ist vorgesehen den Bremsdruck nach dem Lösen des Bremspedals nur für einen bestimmten Zeitraum aufrecht zu erhalten. Danach ist ein zeitgesteuertes Lösen des Bremsdrucks vorgesehen.

Eine weitere bevorzugte Ausgestaltung der Erfindung sieht vor, daß die Hillholderfunktion durch den Fahrer aktiviert wird. Dies geschieht in vorteilhafter Weise dadurch, daß nach Stillstand des Fahrzeugs und Abwarten einer bestimmten Zeit bei weiter getretenem Bremspedal, eine zusätzliche kurze Druckerhöhung im Bremssystem durch Aufbringen einer zusätzlichen Kraft am Bremspedal durch den Fahrer die Hillholderfunktion aktiviert. Dieser Fuß-"Kick" aktiviert also die Hillholderfunktion. Es ist weiterhin vorstellbar, daß eine weiterer Fußkick die Hillholderfunktion wiederum ausschalten und ein erneuter Fußkick die Hillholderfunktion wieder aktiviert usw. Ein Ausschalten der Hillholderfunktion kann z. B. wünschenswert sein, wenn das an einer Steigung stehende Fahrzeug bewußt zurückrollen soll, um z. B. ein Ausweichen hinter einem zurückrollenden Fahrzeug vor dem Ablauf der zeitgessteuerten Lösefunktion zu ermöglichen.

Bei einer weiteren vorteilhaften Ausführung der Erfindung wird der Fahrzeuglenker vom Einschalten der Hillholderfunktion durch ein Signal in Kenntnis gesetzt. Dies kann z. B. durch ein akustisches oder optisches Signal erfolgen oder auch aus einer Kombination von akustischem und optischem Signal. Bei der Deaktivierung der Hillholderfunktion würde das Signal dann erlöschen.

Eine weitere vorteilhafte Ausgestaltung der Erfindung sieht vor, daß Reduzieren des Bremsdrucks beim zeitgesteuerten Lösen in zwei Schritten durchzuführen. In vorteilhafter Weise läßt sich dies mit den heute gebräuchlichen diagonal wirkenden Zweikreisbremsanlagen durchführen. Dabei wird zuerst ein Bremskreis drucklos geschaltet. Durch die dann auftretende diagonale Verspannung des Fahrzeugs wird eine zusätzliche Rückmeldung an den Fahrzeugführer gegeben, daß die Hillholderfunktion im Stadium der Deaktivierung ist, und ein Lösen der Bremse unmittelbar bevorsteht. Diese Funktion läßt sich nicht nur mit der erfindungsgemäßen Hillholderfunktion durchführen, sondern ist bei allen Hillholderfunktionen anwendbar, bei denen ein diagonales Zweikreisbremssystem vorhanden ist, und die Steuerung der beiden Kreise unabhängig voneinander erfolgen kann.

Vorteilhafter Weise lassen sich auch die Funktionen der automatischen Aktivierung der Hillholderfunktion und das manuelle Aus- bzw. Einschalten der Hillholderfunktion durch den Fahrzeugführer miteinander kombinieren. So ist es z. B. denkbar, daß der Fahrzeugführer die automatische Aktivierung der Hillholderfunktion nutzt aber die Deaktivierung manuell z. B. über den zuvor beschriebenen Fußkick durchführt.

Die Erfindung betrifft ferner eine Vorrichtung zur Steuerung einer Bremsanlage, die dazu geeignet ist, die beschriebenen Verfahren durchzuführen.

Die Erfindung wird anhand der in der beiliegenden Zeichnung gezeigten Diagramme näher erläutert. Es zeigen:

Fig. 1    ein Diagramm eines typischen Verlaufs bei Nutzung des erfindungsgemäßen Verfahrens zur automatischen Anfahrhilfe

Fig. 2    ein Diagramm eines typischen Verlaufs der getriggerten erfindungsgemäßen Anfahrhilfe

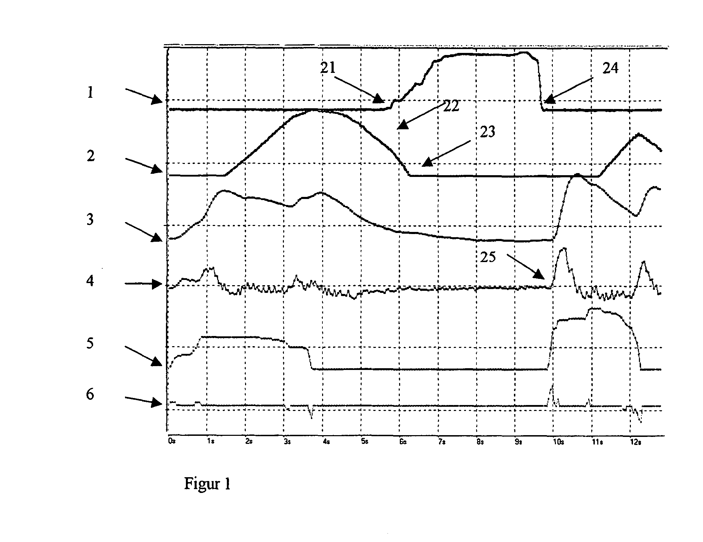

Figur 1 zeigt ein Diagramm mit einem typischen zeitlichen Verlauf einiger Fahrzeugparameter vor und während der Aktivierung der erfindungsgemäßen automatischen Anfahrhilfe. Aufgetragen sind dabei ein Bremsdruck 1, eine zugehörige Fahrzeuggeschwindigkeit 2, eine entsprechende Motordrehzahl 3, ein sich daraus ergebender Motordrehzahländerung 4, eine zugehörige Drosselklappenposition 5 sowie eine daraus abgeleitete Drosselklappenpositionsänderung 6. Der aufgezeichnete Bremsdruck 1 ist dabei der vom Fahrer durch die Pedalkraft ins Bremssystem gegebene Bremsdruck, also nicht der vom Bremssystem gehaltene Bremsdruck während der Aktivierung des erfindungsgemäßen Hillholders. Aus dem Verlauf der oben angeführten Fahrzeugparameter kann die Bedingung zum Aktivieren der Hillholderfunktion abgelesen werden. Genutzt werden dazu einige getriggerte Funktionen. Erfindungsgemäß kann die Hillholderfunktion nur aktiviert werden, wenn das Fahrzeug zum Stillstand gekommen ist. Dieser Punkt ist mit Trigger 23 erreicht. Zusätzlich muß die mit Trigger 22 bezeichnete Bedingung erfüllt sein:

Beginnend mit einem von Null ansteigenden Bremsdruck, hier durch Trigger 21 gekennzeichnet, werden die diskreten synchronisierten Abtastwerte von Fahrzeuggeschwindigkeit V und Bremsdruck P auf Kontinuität hin untersucht. Der Kontinuitätsfaktor $K_f$ entspricht dem Quotienten aus der fortlaufenden Abtastzahl n und der Bedingung b:

$$K_f = b/n$$

Mit dem Zeitpunkt Trigger 21 werden n=0 und b=0 gesetzt. N inkrementiert bei jedem diskreten Abtastschritt, wohingegen b nur bei folgender Bedingung inkrementiert

$$P_n\text{-}1 < P_n \quad \&\& \quad V_n\text{-}1 >= V_n$$

Die Aktivierung wird jetzt ausgeführt, falls nach dem Stillstand des Fahrzeugs V=0 eine Wartezeit $t_{w1}$ abgelaufen ist und der Kontinuitätsfaktor über einem Schwellwert liegt:

$$K_f > K_{fSchwell.}$$

Trigger 24 und Trigger 25 werden für das automatische Lösen der Bremse beim Anfahren benötigt. Dabei zeigt Trigger 24 an, daß der Fahrer das Bremspedal gelöst hat und durch Trigger 25 wird angezeigt, daß die Motordrehzahl erhöht wurde und also ein Anfahren zu erwarten ist. Mittels dieser beiden Bedingungen ist dann die Vorraussetzung zur Deaktivierung der Hillholderfunktion gegeben.

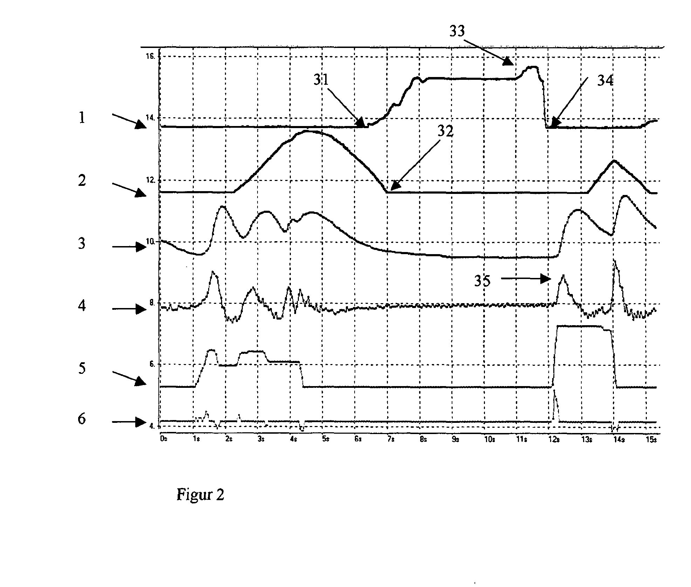

Figur 2 zeigt ein Diagramm mit einem typischen zeitlichen Verlauf einiger Fahrzeugparameter vor und während der Aktivierung der erfindungsgemäßen getriggerten Anfahrhilfe. Dabei wird das Fahrzeug bis zum Stillstand abgebremst. Nach einer spezifizierten Wartezeit $t_{w2}$ bei gehaltenem Bremsdruck wird eine kurze Erhöhung des Bremsdrucks durch den Fahrer erwartet, um die Funktion zu aktivieren.

Die Funktion wird somit durch einen Fußkick des Fahrers gezielt ausgelöst, unabhängig von der Längsneigung der Fahrbahn.

Der Stillstand des Fahrzeugs wird in Trigger 32 festgestellt, wobei Trigger 31 den Beginn der Bremsung kennzeichnet. Der Fußkick ist in der Abbildung mit Trigger 33 bezeichnet. Das Triggerkriterium ist sofort erfüllt, wenn die Ableitung des Bremsdrucks einen Schwellwert $P_{dyn}$ überschreitet:

$$dP/dt \; > \; P_{dyn}$$

Falls die Aktivierung nicht mehr benötigt wird, kann der Fahrer nun in der zeitlichen Sequenz durch einen weiteren Fußkick die Funktion wieder ausschalten. Das Ausschalten kann ebenfalls erfolgen, indem der Fahrer das Bremspedal löst und vor dem zeitgesteuerten Abschalten der Funktion den Bremsdruck auf den zum Zeitpunkt Trigger 33 vorliegenden Wert wieder erhöht. Wie in Figur 1 sind Trigger 34 und 35 für das automatische Anfahren vorgesehen.

**Patentansprüche**

1. Verfahren zur Steuerung einer Bremsanlage eines Fahrzeugs mit einer automatischen Feststellbremsbzw. Hillholder-Funktion, bei der die Bremskraft an wenigstens einem Rad des Fahrzeugs unabhängig von der Betätigung eines Bremspedals gehalten wird, wobei die Hillholder-Funktion aktiviert wird, wenn

   a) eine Neigung des Fahrzeuges gegenüber der Längsachse und
   b) ein Stillstand des Fahrzeugs erkannt wird,

   und bei dem die durch die Hillholder-Funktion aufgebaute Bremskraft bei Vorliegen vorbestimmter Bedingungen wieder abgebaut wird,
   **dadurch gekennzeichnet, dass**
   die Erkennung der Neigung des Fahrzeuges in Schritt a) anhand einer Betrachtung der Werte für die Fahrzeuggeschwindigkeit und den Bremsdruck erfolgt.

2. Verfahren nach Anspruch 1,
   **dadurch gekennzeichnet, dass**
   die Neigungserkennung ohne Zuhilfenahme eines Neigungssensors erfolgt.

3. Verfahren nach Anspruch 1 oder 2,
   **dadurch gekennzeichnet, dass**
   zur Erkennung der Neigung des Fahrzeuges die synchronisierten Abtastwerte von Fahrzeuggeschwindigkeit V und Bremsdruck P beginnend mit einem von Null ansteigenden Bremsdruck auf Kontinuität hin untersucht werden.

4. Verfahren nach einem der Ansprüche 1 bis 3,
   **dadurch gekennzeichnet, dass**
   die Hillholder-Funktion aktiviert wird, wenn das Fahrzeug zum Stillstand gekommen ist, und wenn nach Ablauf einer Wartezeit, in der sich das Fahrzeug im Stillstand befindet, ein aus diskreten Abtastwerten der Fahrzeuggeschwindigkeit $V_n$ und des Bremsdrucks $P_n$ bestimmter Kontinuitätsfaktor $K_f$ größer als ein Schwellwert $K_{fSchwell}$ ist, wobei der Kontinuitätsfaktor $K_f$ als Quotient aus einer fortlaufenden Abtastzahl n und dem Wert b gemäß der Formel $K_f = b/n$ berechnet wird, wobei

   - zu Beginn bei einem von Null ansteigenden Bremsdruck n=0 und b=0 gesetzt werden, und
   - bei jedem diskreten Abtastschritt n inkrementiert wird, wohingegen b nur dann inkrementiert wird, wenn die Bedingung

   $$P_{n-1} < P_n \; \&\& \; V_{n-1} >= V_n$$

   erfüllt ist.

5. Verfahren zur Steuerung einer Bremsanlage eines Fahrzeugs nach einem der Ansprüche 1 bis 4,
   **dadurch gekennzeichnet, dass**
   zum Abbau der Bremskraft eine motorseitige gesteuerte Funktion herangezogen wird.

6. Verfahren zur Steuerung einer Bremsanlage eines Fahrzeugs nach Anspruch 5,
   **dadurch gekennzeichnet, dass**
   bei der motorseitigen gesteuerten Funktion nur die Signale für Bremsdruck (1), Motordrehzahl (3) und Gaspedalstellung berücksichtigt werden.

7. Verfahren zur Steuerung einer Bremsanlage eines Fahrzeugs nach einem der Ansprüche 1 bis 6,
   **dadurch gekennzeichnet, dass**

der Fahrzeugführer vom unabhängigen Halten der Bremskraft durch ein Signal informiert wird.

8. Verfahren zur Steuerung einer Bremsanlage eines Fahrzeugs nach Anspruch 7,
   **dadurch gekennzeichnet, dass**
   das Signal ein akustisches und/oder optisches Signal ist.

9. Vorrichtung zur Steuerung einer Bremsanlage eines Fahrzeugs,
   **dadurch gekennzeichnet, dass**
   die Vorrichtung dazu in der Lage ist, ein Verfahren nach mindestens einem der Ansprüche 1 bis 8 durchzuführen.

## Claims

1. Method for controlling a braking system of a vehicle having an automatic hillholder function in which the braking force is maintained at at least one wheel of the vehicle independently of the activation of a brake pedal, the hillholder function being activated if

   a) an inclination of the vehicle with respect to the longitudinal axis and
   b) a stationary state of the vehicle are detected, and in which the braking force built up by the hillholder function is reduced again when predetermined conditions are present,

   **characterized in that**
   the detection of the inclination of the vehicle in step a) is carried out by considering the values for the velocity of the vehicle and the brake pressure.

2. Method according to Claim 1,
   **characterized in that** the detection of the inclination is carried out without the aid of an inclination sensor.

3. Method according to Claim 1 or 2,
   **characterized in that** in order to detect the inclination of the vehicle the synchronized sampled values of the velocity V of the vehicle and the brake pressure P are examined for continuity starting with a brake pressure which increases from zero.

4. Method according to one of Claims 1 to 3,
   **characterized in that** the hillholder function is activated if the vehicle has come to a standstill and if after the expiry of a waiting time in which the vehicle is in the stationary state a continuity factor $K_f$ which is determined from discrete sampled values of the velocity $V_n$ of the vehicle and of the brake pressure $P_n$ is higher than a threshold value $K_{fSchwell}$, the continuity factor $K_f$ being calculated as a quotient of a continuous sampled number n and the value b according to the formula $K_f = b/n$, where

   - at the start n=0 and b=0 are set for a brake pressure which increases from zero, and
   - incrementation is carried out at each discrete sampled step n, while b is incremented only if the condition

$$P_{n-1} \; < \; P_n \;\; \&\& \;\; V_{n-1} \geq V_n$$

is met.

5. Method for controlling a braking system of a vehicle according to one of Claims 1 to 4, **characterized in that** a controlled engine-end function is used to reduce the braking force.

6. Method for controlling a braking system of a vehicle according to Claim 5, **characterized in that** only the signals for the brake pressure (1), engine speed (3) and position of the accelerator pedal are taken into account in the controlled engine-end function.

7. Method for controlling a braking system of a vehicle according to one of Claims 1 to 6, **characterized in that** the driver of the vehicle is informed about the independent stopping of the braking force by means of a signal.

8. Method for controlling a braking system of a vehicle according to Claim 7, **characterized in that** the signal is an audible signal and/or visual signal.

9. Device for controlling a braking system of a vehicle, **characterized in that** the device is capable of carrying out a method according to at least one of Claims 1 to 8.

## Revendications

1. Procédé de commande d'un équipement de freinage d'un véhicule comprenant une fonction de frein de stationnement ou d'encliquetage anti-recul, avec lequel la force de freinage est maintenue sur au moins une roue du véhicule indépendamment de l'actionnement d'une pédale de frein, la fonction d'encliquetage anti-recul étant activée lorsque

   a) une inclinaison du véhicule par rapport à l'axe longitudinal et
   b) une immobilisation du véhicule est détectée,

   et avec lequel la force de freinage établie par la fonction d'encliquetage anti-recul est de nouveau annulée en présence de conditions prédéfinies, **caractérisé en ce que** la détection de l'inclinaison du véhicule à l'étape a) est effectuée au moyen d'une prise en considération des valeurs de la vitesse du véhicule et de la pression de freinage.

2. Procédé selon la revendication 1, **caractérisé en ce que** la détection de l'inclinaison s'effectue sans faire appel à un capteur d'inclinaison.

3. Procédé selon la revendication 1 ou 2, **caractérisé en ce que** pour détecter l'inclinaison du véhicule, les valeurs échantillonnées synchronisées de la vitesse du véhicule V et de la pression de freinage P sont analysées pour vérifier leur continuité en commençant par une pression de freinage croissant à partir de zéro.

4. Procédé selon l'une des revendications 1 à 3, **caractérisé en ce que** la fonction d'encliquetage anti-recul est activée lorsque le véhicule a été immobilisé et si, après l'écoulement d'un temps d'attente pendant lequel le véhicule se trouve à l'arrêt, un facteur de continuité $K_f$ déterminé à partir des valeurs échantillonnées discrètes de la vitesse du véhicule $V_n$ et de la pression de freinage $P_n$ est supérieur à une valeur de seuil $K_{fSchwell}$, le facteur de continuité $K_f$ étant calculé sous la forme d'un quotient d'un taux d'échantillonnage continu n et de la valeur b selon la formule $K_f = b/n$,

    - n et b étant fixés à 0 au début, en présence d'une pression de freinage croissant à partir de zéro et
    - n étant incrémenté à chaque étape d'échantillonnage discrète, alors que b n'est incrémenté que lorsque la condition

$$P_{n-1} < P_n \ \&\& \ V_{n-1} >= V_n$$

est vérifiée.

5. Procédé de commande d'un équipement de freinage d'un véhicule selon l'une des revendications 1 à 4, **caractérisé en ce qu'**une fonction commandée du côté du moteur est mise à contribution pour annuler la force de freinage.

6. Procédé de commande d'un équipement de freinage d'un véhicule selon la revendication 5, **caractérisé en ce que** seuls les signaux de la pression de freinage (1), de la vitesse de rotation du moteur (3) et de la position de la pédale des gaz sont pris en compte pour la fonction commandée du côté du moteur.

7. Procédé de commande d'un équipement de freinage d'un véhicule selon l'une des revendications 1 à 6, **caractérisé en ce que** le conducteur du véhicule est informé par un signal du comportement indépendant de la force de freinage.

8. Procédé de commande d'un équipement de freinage d'un véhicule selon la revendication 7, **caractérisé en ce que** le signal est un signal sonore et/ou visuel.

9. Dispositif de commande d'un équipement de freinage d'un véhicule, **caractérisé en ce que** le dispositif est en mesure de mettre en oeuvre un procédé selon au moins l'une des revendications 1 à 8.

Figur 1

EP 1 442 951 B1

Figur 2